# EUROPEAN PATENT APPLICATION

(11) **EP 4 414 939 A1**
(43) Date of publication of application: **14.08.2024**
(21) Application number: 23155345.4
(22) Date of filing: 07.02.2023
(51) Int. Cl.: G06T 11/00

(54) **METHOD FOR POSITIONING AN ITEM**

(71) Applicant: Aptiv Technologies AG, 8200 Schaffhausen (CH)
(72) Inventor: Manterys, Marek, 31-416 Kraków (PL); Duc, Szymon, 34-331 Pewel Slemienska (PL); Kubacki, Daniel, 34-340 Jelesnia (PL)
(74) Representative: Manitz Finsterwald Patent- und Rechtsanwaltspartnerschaft mbB

(57) **Abstract**

A method for positioning an item at a target position of an object comprises the generation of a superimposed image comprising a real-time image of an environment of the target position and a marker. An item may be placed at the target position by aligning the item and the marker.

## Description

### FIELD

The present disclosure relates to a method for positioning an item at a target position of an object and to an apparatus for performing such method.

In certain technical fields there is a requirement to position an item at a target position of an object. For example, in the production of cable harnesses it is necessary to position a plurality of holders for the wire harness at specific target locations onto a base plate. After the holders have been placed and the harness has been put on the holders, it may also be necessary to manually apply a plurality of spot tapes, that may have different colors, at specific target locations of the wire harness. The spot tapes must be applied with accuracy at a certain preset position along the length of the wire harness.

Accordingly, there is a need to provide a method for positioning an item at a target position of an object, said method allowing to precisely position the item at the target position in a short period of time.

### SUMMARY

The present disclosure provides a method and an apparatus according to the independent claims. Embodiments are given in the subclaims, the description and the drawings.

In one aspect, the present disclosure is directed at a method for positioning an item at a target position of an object, the method comprising: generating a real-time image of an environment of the target position, generating an image of a marker, generating a superimposed image comprising both images with the marker located at the target position, and placing the item at the target position of the object by aligning the item and the marker in the superimposed image.

In the above method a real-time image of an environment of a target position of an object is generated, e.g. by means of a digital camera and an image processing system. An image of a marker is generated and further a superimposed image is generated that comprises the real-time image of the environment of the target position and the image of the marker with the marker being located at the target position in the superimposed image. After an item has been placed in the vicinity of the target position, an operator may monitor the superimposed image that comprises the real-time image of the environment of the target position and the marker located at the target position. This allows a worker to place the item precisely at the target position of the object by aligning the item and the marker in the superimposed image.

With the above method it is possible to place a variety of items at target positions in a very short period of time with low cost and high precision. Thereby, a set-up time and a manufacturing time for manufacturing, assembling and finalizing a wire harness is drastically reduced.

According to an embodiment, the real-time image of the environment of the target position is a magnified image. This helps an operator to precisely position the item at a desired target position with high accuracy.

According to a further embodiment, the object is a working table. In this embodiment, the item may comprise a holder for receiving a wire harness. Such holders need to be placed on the working table at certain target positions with high accuracy and with the above-mentioned method it is possible to place items at target positions with an accuracy of about ± 1 mm.

According to a further embodiment, the object is a wire harness and the item to be positioned on the wire harness may have the form of a spot tape. Such spot tapes are manually applied onto the wire harness and need to be applied at a precise location along the length of the wire harness.

According to a further embodiment, the marker may comprise a reticle to simplify an alignment of the item and the marker.

According to a further embodiment, the marker comprises a single straight line or two parallel straight lines. Such lines can be superimposed on the real-time image of a wire harness allowing an operator to precisely apply a spot tape next to the single straight line of the marker or between two parallel straight lines of the marker when monitoring the superimposed image.

According to a further embodiment, the superimposed image is projected onto a working surface or a working table. In this case, a worker does not need to substantially move his head for monitoring the superimposed image when positioning an item on or above the working surface.

According to a further embodiment, the superimposed image is projected onto the working surface or the working table adjacent and at a distance to the target position. This allows a worker to control his manual movements by monitoring the superimposed image without even moving his pupils.

According to a further embodiment, a plurality of representations of items are projected onto a working surface or a working table. For example, if the items to be positioned are spot tapes, the representations may comprise a representation of the required spot tapes in a desired color and arrangement next to a wire harness placed on the working surface or the working table. This provides information for a worker at which location a spot tape of a respective color is to be applied onto the wire harness thereby reducing mistakes and worktime.

In another aspect, the present disclosure is directed at an apparatus for performing the above-disclosed methods. In an embodiment, the apparatus comprises a working table and at least one camera located above the working table. Further, a controller is provided that is configured to generate a real-time image of an environment of a target position that is located on or above the working table. Further, the controller is configured to generate an image of a marker and to generate a superimposed image comprising both images with the marker located at the target position. The apparatus further comprises a projector that projects the superimposed image onto the working table.

With the above apparatus various items can be positioned on objects. For example, a holder for holding a wire harness can be placed at a desired target position on the working table with high preciseness. It is also possible to position items on target locations on the wire harness, such as spot tapes or the like. With the camera located above the working table it is possible to detect and define calibration points on the working table that allow the controller to locate a marker at a preset target position in the superimposed image.

According to an embodiment, at least one mirror is provided that reflects the superimposed image onto the working surface. The mirror may comprise more than one mirror surface to ensure a large display area on the working surface. Further, by using a mirror, a compact design and a small height of the apparatus are achieved because a beam of the projector can be split and/or reversed thereby enlarging the resulting displayed image on the working table.

According to a further embodiment, the apparatus may comprise at least one holder having a beacon. After placing such holder onto the working surface, the beacon helps to identify the current position of the holder by means of the camera and the controller. The beacon may be realized in different embodiments, such as a colored and/or reflecting marker, a specific symbol and/or a reticle. The beacon may be constituted of a passive element that makes it easier for an image processing system to identify the correct position of the holder over the working table.

According to an embodiment, the beacon may comprise a pole. The height of such pole may be chosen such that the top of the pole is usually not covered by an operator when positioning the holder.

According to a further embodiment, the controller is further configured to determine from the real-time image a position of an item placed on an object and to compare this position with a preset position. Such apparatus provides an improved quality control since the controller may issue an alarm signal and/or a message if the item was not properly placed at the preset position along the length of the wire harness, or if a wrong item, such as a spot tape with a wrong color, has been applied.

According to a further embodiment, the wire harness may be placed on the working table with at least one holder being used to provide the wire harness with a U-turn. For example, the holder may be provided with a pole wherein the wire harness is guided around the pole to make a 180° turn. In this embodiment, the ground space needed for the working table is reduced, in particular if the length of the wire harness exceeds the length of the working table.

### DRAWINGS

Exemplary embodiments and functions of the present disclosure are described herein in conjunction with the following drawings, showing schematically in:
- Fig. 1: a perspective view of a working table;
- Fig. 2: a top view of a working table with a superimposed image being projected onto the working table; and
- Fig. 3: a top view onto a working table with different images projected onto the working table.

### DETAILED DESCRIPTION

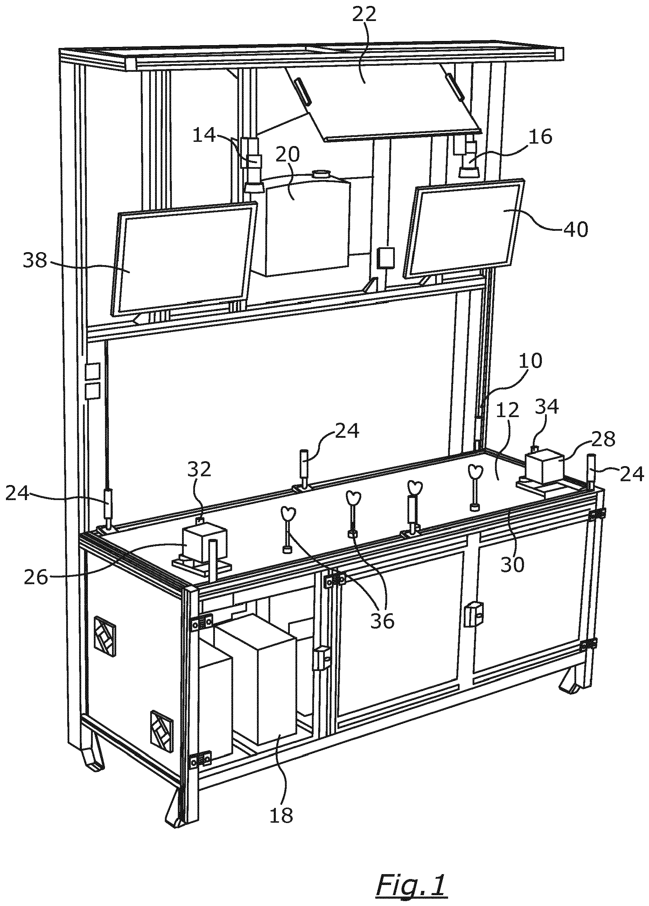

Fig. 1 depicts an apparatus adapted to position items at a target position of an object. In this embodiment, the apparatus comprises a frame structure 10 comprising a horizontal base plate forming a working table 12 with a working surface. The working surface may be of white or bright color. The working table may also be tilted with regard to the ground. Digital cameras 14 and 16 are mounted on the frame structure 10 above the working table 12. The cameras 14 and 16 form part of an image processing system comprising a controller 18 and at least one display apparatus such as a projector 20. The projector 20 is also located above the working surface 12 but directs its radiation in an upward direction onto a mirror 22 that splits and reflects the projected image onto the working surface 12.

On the working table 12 a plurality of calibration beacons 24 are located. The calibration beacons 24 have the shape of a pole with a top surface of the pole being reflective and/or colored. This allows the controller 18 to precisely determine the location of the calibration beacons 24 within an image taken by the cameras 14 and 16.

In the embodiment shown in Fig. 1 a pair of holders 26 and 28 is provided, both holders 26 and 28 being shiftably mounted on a rail 30. The holders 26 and 28 can also be locked to keep a fixed position along the length of the rail 30. As also shown in Fig. 1, both holders 26 and 28 are provided with a beacon 32 and 34, said beacons also having the shape of a pole with a reflecting and/or colored top surface.

Between the holders 26 and 28 a plurality of auxiliary holders 36 are placed and positioned to receive a wire harness.

When placing a wire harness onto the various holders 26, 28 and 36 the wire harness is fixed at its terminal ends to the holders 26 and 28 to position the wire harness at a precisely defined location above the working table 12.

For positioning the holders 26, 28 and/or the holders 36 at a defined target position, the controller 18 is configured to generate images using the cameras 14 and 16, the images being displayed e.g. by means of the projector 20. Alternatively, or additionally, the images could also be displayed on monitors 38, 40 mounted above the working table 12 on the frame structure 10. The monitors 38 and 40 can also be used to display information and/or instructions for a worker.

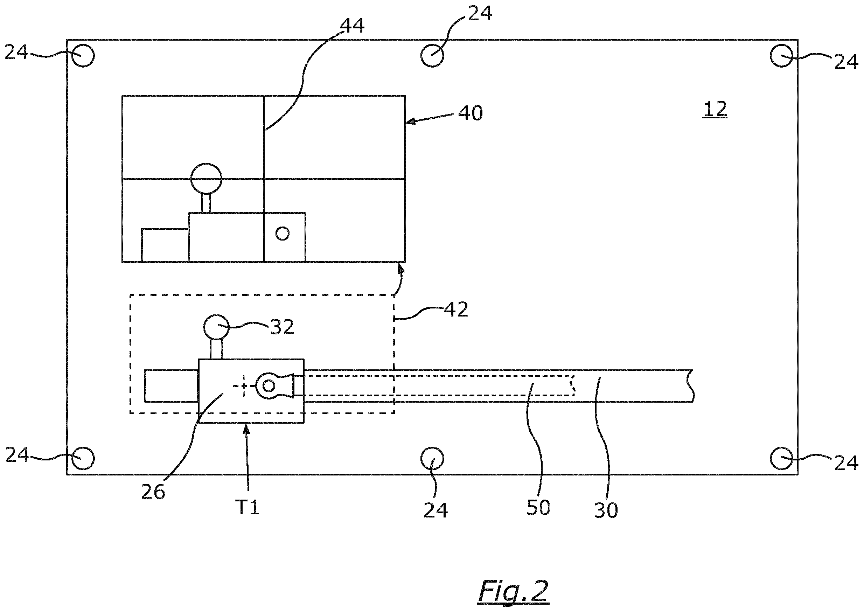

Fig. 2 illustrates a top view on the working table 12 wherein for illustrative purposes only the holder 26 is shown that can be shifted along the rail 30. At first, it will be necessary to position the holder 26 at a desired target position T1 (indicated with a dotted cross in Fig. 2) on the working table 12. In order to assist a worker in approaching the correct target position T1 along the length of the rail 30, the camera 14 generates a real-time image 40 of an environment 42 (shown in dotted lines in Fig. 2) of the target position T1. This real-time image 40 is projected onto the working table 12 by means of the projector 20.

Simultaneously, the controller 18 generates an image of a marker 44. In the embodiment illustrated in Fig. 2 the marker 44 comprises a reticle. Finally, the controller 18 generates a superimposed image 40 comprising the image of the marker 44 located at the target position T1 and the real-time image of the environment 42 of the target position T1.

When a worker is shifting the holder 26 along the length of the rail 30, the current position of the holder 26 can be monitored by viewing the superimposed image 40 displayed on the working table 12. This allows the worker to place the holder 26 at the desired target position T1 by aligning the holder 26 and the marker 44 in the superimposed image 40, i.e. by shifting the holder 26 such that in the superimposed image the center of the marker 44 is located in the center of the beacon 32 of the holder 26. This target position T1 is preset by the controller 18 using the calibration beacons 24.

After the holder 26 is positioned at the target position T1, it is latched to the rail 30 and the second holder 28 is positioned on the working table 12 using the above method. Thereafter, the auxiliary holders 36 can be positioned between the holders 26 and 28 also using the above method. Of course, it is also possible the place the holders 26 and 28 without using a rail.

When the above steps are completed, a wire harness can be placed on the holders 26, 28 and 36 that have a well-defined position above the working table 12.

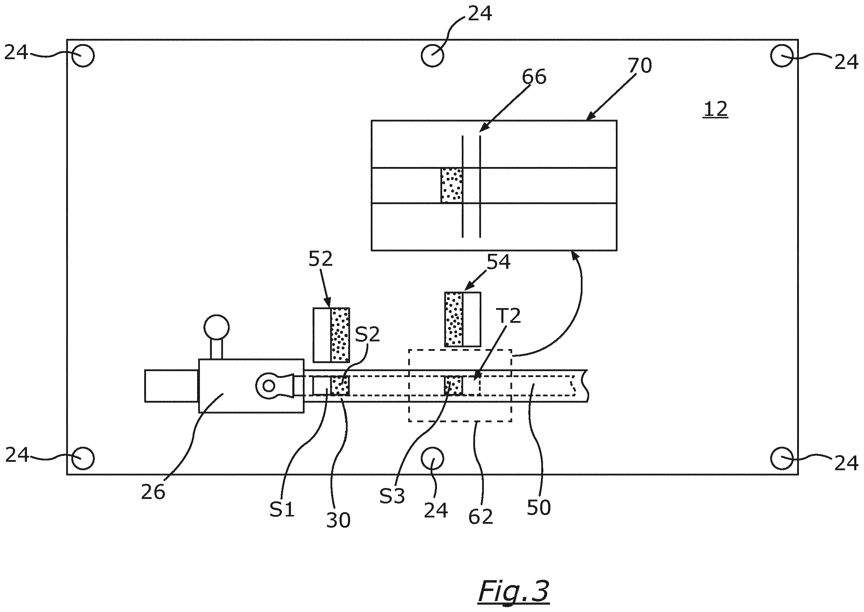

To finalize a wire harness 50, indicated in Fig. 2 in dashed lines only, the wire harness 50 may be provided with labels such as spot tapes. Spot tapes can be applied manually and need to be positioned at a correct location and in a correct color. To facilitate this work, the controller 18 generates representations 52, 54 (see Fig. 3) of the various spot tapes to be applied and these representations are projected onto the working table 12 next to the target locations of the spot tapes.

Fig. 3 shows a top view onto the working table 12 with a wire harness 50 mounted in the holders and a plurality of spot tapes already being applied. More specifically, Fig. 3 illustrates a first and a second spot tape S1 and S2 applied next to each other adjacent the corresponding representation 52 displayed on the working table 12. At a distance, a third spot tape S3 has been applied and a further spot tape (having for example a different color than the third spot tape S3 and having the same color as the first spot tape S1) needs to be applied to the wire harness 50 at a target position T2 adjacent the third spot tape S3. To facilitate this work and to position the spot tape at the target position T2 with high accuracy on the wire harness 50, the controller 18 generates a real-time image of the environment 62 of the target position T2. Further, the controller 18 generates an image of a marker 66, said marker comprising two parallel straight lines. The controller 18 further generates a superimposed image 70 wherein the superimposed image 70 shows the marker 66 located at the target position T2. Again, the target position T2 is preset by the controller.

To allow a worker a simplified handling, the real-time image of the environment 62 of the target position T2 - and correspondingly also the superimposed image 70 - is a magnified image. When applying a spot tape at the target position T2, a worker can monitor the magnified superimposed image 70 while applying the tape. Due to the marker 66 comprising two parallel lines aligned perpendicular to the length extension of the wire harness 50 (in the superimposed image 70), the worker can apply the spot tape at the correct position with high accuracy. Due to the representation 54 displayed onto the working table 12 next to the target position T2, there is a very low probability that the worker will apply a spot tape in a wrong color. When placing the spot tape at the target position T2 of the wire harness 50, the worker needs merely to align the spot tape and the marker 66 such that the spot tape is finally located between the two parallel straight lines of the marker 66.

According to an embodiment, the controller 18 is further configured to determine from the real-time image the position and/or the color of an item, such as a holder or a spot tape, placed on an object, such as the working table or the wire harness, and to compare this position and/or color with a preset position and/or color stored in the controller 18. As a result of this comparison, the controller 18 determines if the item was placed correctly or if the location of the item deviates from the preset position thus exceeding a predetermined threshold. Further, the controller 18 may determine if the color of an item, e.g. of a spot tape, corresponds to a required preset color. If there is no match in the position and/or in the color, the controller 18 outputs a warning signal and/or a warning message to indicate that the item was not correctly positioned or that an item was positioned that does not have a required color.

## Claims

1. A method for positioning an item (26, 28, 36, S1-S3) at a target position (T1, T2) of an object (12, 50),
the method comprising:
- generating a real-time image of an environment (42, 62) of the target position (T1, T2),
- generating an image of a marker (44, 66),
- generating a superimposed image (40, 70) comprising both images with the marker (44, 66) located at the target position (T1, T2), and
- placing the item at the target position (T1, T2) of the object (12, 50) by aligning the item (26, 28, 36, S1-S3) and the marker (44, 66) in the superimposed image (40, 70).

2. Method according to claim 1, wherein the real-time image of the environment (62) of the target position (T2) is a magnified image.

3. Method according to claim 1 or 2, wherein the object is a working table (12).

4. Method according to claim 3, wherein the item is a holder (26, 28, 36).

5. Method according to any one of the preceding claims 1 or 2, wherein the object is a wire harness (50).

6. Method according to claim 5, wherein the item is a spot tape (S1, S2, S3).

7. Method according to any one of the preceding claims, wherein the marker (44) comprises a reticle.

8. Method according to any one of the preceding claims 1 - 6, wherein the marker (66) is a single straight line or comprises two parallel straight lines.

9. Method according to any one of the preceding claims, wherein the superimposed image (40, 70) is projected onto a working table (12).

10. Method according to claim 9, wherein the superimposed image (40, 70) is projected onto the working table (12) adjacent and at a distance to the target position (T1, T2).

11. Method according to any one of the preceding claims, wherein a plurality of representations (52, 54) of items is projected onto a working table (12).

12. An apparatus for performing a method according to any one of the preceding claims, comprising
a working table (12) and at least one camera (14, 16) located above the working table (12),
a controller (18) configured to
generate a real-time image of an environment (42, 46) of a target position (T1, T2), said target position being located on or above the working table (12),
generate an image of a marker (44, 66),
generate a superimposed image (40, 70) comprising both images with the marker (44, 66) located at the target position (T1, T2), and
at least one projector (20) that projects the superimposed image (40, 70) onto the working table (12).

13. Apparatus according to claim 12, wherein
at least one mirror (22) is provided that reflects the superimposed image (40, 70) onto the working table (12).

14. Apparatus according to claim 12 or 13, further comprising at least one holder (26, 28) having a beacon (32, 34).

15. Apparatus according to any one of claims 12 - 14, wherein the controller (18) is further configured to determine from the real-time image a position and/or a color of an item (26, 28, 36, S1-S3) placed on an object (12, 50) and to compare this position and/or color with a preset position and/or color.
